# EUROPEAN PATENT APPLICATION

(11) **EP 4 557 726 A1**
(43) Date of publication of application: **21.05.2025**
(21) Application number: 23210941.3
(22) Date of filing: 20.11.2023
(51) Int. Cl.: H04N 19/114, G08B 13/196, H04N 7/18, H04N 19/152, H04N 19/177

(54) **SYSTEM, METHOD, AND NON-TRANSITORY COMPUTER-READABLE STORAGE MEDIUM FOR PRE-EVENT RECORDINGS**

(71) Applicant: Axis AB, 223 69 Lund (SE)
(72) Inventor: Edpalm, Viktor, 223 69 Lund (SE); Cremon, Jonas, 223 69 Lund (SE); Svensson, Linus, 223 69 Lund (SE)
(74) Representative: AWA Sweden AB

(57) **Abstract**

A system comprising: an encoder having a first encoder state and a second encoder state, the encoder configured to: encode (S616) received image frames using a dynamic group of pictures, GOP, length, and varying the GOP length to meet one or more requirements of the encoded video sequence; implement a force keyframe functionality; an encoding state controller configured to: upon receiving an event indication pertaining to the received image frames, setting (S614) the encoder state of the encoder to the first encoder state; a FIFO buffer configured to store image frames encoded by the encoder during the second encoder state; and a keyframe controller configured to: obtain a trigger time interval and while the encoder being in the second encoder state, at the trigger time interval, trigger the encoder to encode a keyframe, such that the FIFO buffer always stores at least one keyframe.

## Description

### Technical Field

The present invention relates to the field of capturing video sequences, and more particularly to a system, method, and non-transitory computer-readable storage medium for pre-event recordings.

### Background

Pre-event recording technology, often referred to as "pre-buffering", "pre-roll," or "pre-capture", continuously records and temporarily stores a rolling segment of video data. This ensures that the crucial moments leading up to a triggering event are not missed. The pre-event recording technology is a significant advancement over traditional systems that only started recording upon certain stimuli, and thus often missing vital initial footage.

The concept of buffering data has roots in various technologies, with its adaptation into video recording representing a major leap, for example in security systems and unpredictable environments like wildlife monitoring. These systems hinge on a rolling buffer that updates constantly, discarding older segments as new footage is recorded. Upon a trigger, such as motion detection or manual activation, the technology ensures the capture of events just before the actual trigger, offering valuable context that would otherwise be lost.

Video encoding is a technique used to compress video files by reducing data redundancy and file size, making storage and transmission more efficient. Central to this process are concepts like key frames (I-frames), or delta frames (P-frames and B-frames), each representing different strategies within compression technology. I-frames, or Intra-coded pictures, are complete images that act as reference points within a video stream. P-frames (Predictive-coded pictures) and B-frames (Bidirectionally predictive-coded pictures) follow I-frames and are more compressed, as they represent only the changes from the previous frames, rather than containing a complete image.

The interplay between these frame types is orchestrated through a concept known as Group of Pictures (GOP), which starts with an I-frame and is followed by a sequence of P-frames and/or B-frames. GOP length within video encoding plays a pivotal role in managing bitrate, quality, and power consumption, making it a versatile tool depending on the end goal of the video production or distribution. By extending the GOP length, encoders can significantly reduce the bitrate since fewer I-frames, which are the most data-intensive, are used. Conversely, shortening the GOP length typically increases the video quality, as more reference frames (I-frames) are provided, improving the clarity especially in videos with rapid motion or complex scenes.

In video playback, the starting point is dictated by the presence of 1-frames, the independent frames that contain the full range of data necessary to decode a series of subsequent frames. Essentially, you can only initiate playback from an I-frame, not from P-frames or B-frames, as these dependent frames require information from I-frames to be properly decoded and understood. As such, the length of a GOP directly impacts the flexibility of video playback. A longer GOP means fewer I-frames are interspersed throughout the video, limiting the points at which playback can commence.

Consequently, if the GOP length is varied for the pre-event video sequence stored in the rolling buffer such that the rolling buffer cannot contain a keyframe, the content of the buffer cannot be used as intended.

There is thus a need for improvements in this context.

### Summary

In view of the above, solving or at least reducing one or several of the drawbacks discussed above would be beneficial, as set forth in the attached independent patent claims.

According to a first aspect of the present invention, there is provided a system comprising an encoder (also referred herein as the first encoder) having a first encoder state and a second encoder state, the encoder configured to: continuously receive image frames of a video sequence to be encoded into an encoded video sequence; encode the received image frames using a dynamic group of pictures, GOP, length, and varying the GOP length to meet one or more requirements of the encoded video sequence; upon receiving an external trigger to encode a keyframe, encode a current image frame of the received image frames as a keyframe, and one or more image frames subsequent to the current image frame in the received image frames as delta frames.

The system further comprises an encoding state controller configured to: prior to receiving an event indication pertaining to the received image frames, setting the encoder state of the encoder to the second encoder state; and upon receiving the event indication pertaining to the received image frames, setting the encoder state of the encoder to the first encoder state.

The system further comprises a FIFO buffer (also referred herein as the first FIFO buffer) configured to store image frames encoded by the encoder during the second encoder state; and a keyframe controller configured to: obtain a trigger time interval and while the encoder being in the second encoder state, at the trigger time interval, trigger the encoder to encode a keyframe, such that the FIFO buffer always stores at least one keyframe.

The encoder is configured to encode the received image frames using a dynamic GOP length and varying the GOP length to meet one or more requirements of the encoded video sequence. These requirements may include one or more of: controlling bit rate, controlling quality, controlling power consumption, and controlling seek time. Depending on the requirements and conditions present within the image frames or the overarching system, the GOP length may greatly vary. For example, motion within a scene captured by the plurality of image frames may directly influence the GOP length. In scenes with minimal motion, longer GOPs are often sufficient, as fewer changes occur between frames, maintaining a consistent quality without the need for frequent I-frames. Consequently, in some cases, the GOP length may be increased such that the FIFO buffer does not contain any I-frames, which in turn results in that the buffered video sequence cannot be playback as discussed above.

The GOP length may be overridden using a functionality known as "force keyframe", which is a standard feature in most modern video encoders. This functionality allows encoders to insert 1-frames (intra-coded pictures, keyframes) at specific intervals or significant moments, independent of the regular GOP structure. The functionality is essential for many use cases, such as for adaptive streaming protocols, e.g., HLS (HTTP Live Streaming) or MPEG-DASH, where forced keyframes may be used for creating the segments needed for different streaming qualities. Another example usage is error resilience at the encoder. If a packet loss or data corruption occurs, a forced keyframe acts as a reset point, helping to avoid the propagation of errors throughout the video stream. As such, the force keyframe functionality has, over the years, been refined for efficiency and effectiveness. This efficiency means that the encoder can quickly respond to the command without significant delays or additional processing requirements.

The force keyframe functionality can be invoked from outside the encoder. The inventors have realized that such a functionality advantageously can be used to ensure that a rolling buffer (FIFO buffer), storing the video encoded when the encoder is in a "pre-event state" (second encoder state), always stores at least one keyframe (I-frame). The encoder thus implements the force keyframe functionality and is configured to receive an external trigger to encode a keyframe. In response to the trigger, the encoder will encode a current image frame of the continuously received image frames as a keyframe, and one or more image frames subsequent to the current image frame in the received image frames as delta frames. The encoder is essentially configured to restart a GOP when triggered, such that a new GOP is formed using the current image frame as the keyframe. It's important to recognize that upon receiving the trigger, the encoder does not necessarily restart the GOP instantly; instead, it employs a "best effort" strategy, responding as promptly as possible based on various factors such as available computational or memory resources.

The encoder thus has two states: the event-state (first encoder state) and the pre-event state (second encoder state). The state of the encoder is controlled by the encoding state controller that switches the state of the encoder from the second state to the first state upon receiving an event indication pertaining to the received image frames. The event indication may for example indicate that motion is detected in the image frames, that motion in the image frames exceeds a threshold motion, that an object of a certain object type is detected in the image frames, that a manual trigger from e.g., an operator of a camera capturing the image frames is received, etc.

Depending on the state, the system behaves differently. During the second encoder state, the FIFO buffer (the pre-event buffer) is used to store image frames encoded by the encoder. To ensure that the FIFO buffer always stores at least one keyframe, a keyframe controller is provided. The keyframe controller is configured to obtain a trigger time interval. The trigger time interval may be determined by the keyframe controller, or read from a register of the system, or be provided by an operator of the system, etc. The keyframe controller is further configured to, while the encoder being in the second encoder state, at the trigger time interval, trigger the encoder to encode a keyframe. Advantageously, this facilitates that the FIFO buffer always stores at least one keyframe, meaning that the playback of at least parts of the video stored in the FIFO buffer always is possible.

In examples, obtaining a trigger time interval comprises at least one of: determining the trigger time based on a size or length of the FIFO buffer, or obtaining a predetermined trigger time interval.

The trigger time interval for keyframe generation is a flexible parameter that can be either preset or dynamically modified, accommodating changes as conditions require. When users set a desired interval length (e.g., expressed in seconds) or a predetermined trigger interval is otherwise configured, it may in some embodiments serve as an initial guideline. In these embodiments, the system itself may be designed to adjust the trigger interval based on several operational considerations. One factor may be the size or capacity of the FIFO buffer. The system may actively ensure that, regardless of the actual size of the keyframes, which may vary and potentially occupy substantial space in the FIFO buffer, there is always at least one keyframe stored within the buffer. This dynamic adjustment, sometimes overriding user-specified or predefined preferences, may be advantageous for maintaining the integrity of the buffered video stream, and having access to a keyframe in the FIFO buffer.

In some embodiments, the system further comprises a combining unit configured to, upon the encoder switching from the second encoder state to the first encoder state, extract the encoded image frames stored in the FIFO buffer and append image frames encoded by the encoder in the first encoder state to form the encoded video sequence. Beneficially, an encoded video sequence including both the buffered pre-event video and the video encoded during the event is achieved and can be stored and/or transmitted for further handling.

In examples, the encoder is comprised in a first device, wherein keyframe controller and the FIFO buffer are comprised in a second device, separate from the first device, wherein the first device is configured to transmit image frames encoded by the encoder during the second encoder state to the second device for storing in the FIFO buffer. Several advantages may be achieved by implementing the FIFO buffer in a device separate from the encoder. For example, separating the buffer device means the encoder is not sharing processing power or memory with buffering tasks. This may allow each component to operate more efficiently, as they can dedicate all their resources to their primary functions (storing buffered videos and encoding video, respectively). Moreover, a standalone buffering device may be more easily upgraded or scaled than integrated components within a camera or encoder. Furthermore, separation can provide an additional layer of security. If the device with the encoder (e.g., a camera) is compromised, the content in the buffer, especially if the buffer has its own security measures, remains protected. By also implementing the keyframe controller in the second device (separate from the first device including the encoder), the triggering interval may be more easily controlled since the keyframe encoder may have direct access to the FIFO buffer.

In some examples, the first device comprises an image sensor configured to capture the image frames received by the first encoder. Consequently, the encoder is implemented in a camera capturing the plurality of image frames, reducing the complexity of the system.

In some embodiments, the first device is configured to transmit image frames encoded by the encoder during the second encoder state to the second device using a video streaming protocol. Advantageously, using a dedicated video streaming protocol for transferring encoded image frames may allow for real-time or near-real-time transmission, efficient use of bandwidth, error handling and recovery, etc.

In some embodiments, the second device is configured to transmit the trigger to encode a keyframe using a streaming control protocol corresponding to the video streaming protocol. Advantageously, real-time responsiveness may be accomplished, allowing for immediate response to changing network or encoding conditions.

In some embodiments, the system further comprises a plurality of first FIFO buffers, each first FIFO buffer configured to store image frames encoded by the encoder during the second encoder state, wherein the plurality of FIFO buffers are configured to store image frames encoded according to at least one of: different codecs, different resolutions, or different frame rates. Consequently, the first encoder may be configured to encode image frames accordingly, with different attributes according to the above. In some embodiment, a plurality of first encoders are provided, each encoder configured to encode the image frames according to at least one of: different codecs, different resolutions, or different frame rates. Advantageously, storage of the encoded video sequence in diverse formats may be provided, providing greater flexibility and choice in playback or analysis.

In examples, a second encoder is provided in the system. The second encoder may have the same functionality and properties as the (first) encoder described above. The second encoder is configured to encode a second set of image frames, e.g., as captured by another image sensor compared to the first set of image frames received by the first encoder. Consequently, the second encoder may be configured to continuously receive second image frames of a second video sequence to be encoded into a second encoded video sequence; encode the received second image frames using a dynamic group of pictures, GOP, length, and varying the GOP length to meet one or more requirements of the encoded video sequence; upon receiving an external trigger to encode a keyframe, encode a current image frame of the received second image frames as a keyframe, and one or more image frames subsequent to the current image frame in the received second image frames as delta frames.

In this embodiment, the system further comprises a second encoding state controller, similar to the (first) encoding state controller described above. The second encoding state controller may thus be configured to: prior to receiving an event indication pertaining to the received second image frames, setting the encoder state of the second encoder to the second encoder state; and upon receiving the event indication pertaining to the second received image frames, setting the encoder state of the second encoder to the first encoder state.

In this embodiment, the system further comprises a second FIFO buffer configured to store image frames encoded by the second encoder during the second encoder state. Moreover, the keyframe controller is configured to, while the encoder and the second encoder being in the second encoder state, at the trigger time interval, trigger the encoder to encode a keyframe and trigger the second encoder to encode a keyframe such that the FIFO buffer always stores at least one keyframe and such that the second FIFO buffer always stores at least one keyframe. The triggering may advantageously be synchronized such that the triggering of the encoder and the triggering of the second encoder are performed within a threshold time span.

Advantageously, by synchronizing the triggering of the force keyframe functionality of the two encoders, the triggers can be sent simultaneously (or substantially simultaneously, within the threshold time span) to the connected encoders, thus triggering a system-synchronized keyframe in the video sequence captured by different cameras. This may be an advantage for event videos that can be examined simultaneously, for example video from a camera viewing an entrance in combination with video from a door camera at the entrance. It should be noted that the system can be extended with a third, fourth etc., instance of the encoder, encoding state controller and FIFO buffer respectively, wherein the force keyframe triggers of all encoders are controlled by the keyframe controller.

In some embodiments, obtaining a trigger time interval (by the keyframe controller) comprises, determine the trigger time interval based on the size or length of the FIFO buffer and the size or length of the second FIFO buffer. Consequently, in case the two FIFO buffers have different size or length, or if encoded image frames received from the first encoder have different size compared to the encoded image frames received from the second encoder, the keyframe controller may adapt the triggering time considering these differences, such that the FIFO buffer always stores at least one keyframe and such that the second FIFO buffer always stores at least one keyframe. In other embodiments, the triggering time interval is set to a sufficiently short, fixed interval (e.g., 1, 3, 5 seconds), such that the FIFO buffer always stores at least one keyframe and such that the second FIFO buffer always stores at least one keyframe.

In some embodiments, the second encoder is comprised in a third device, separate from the first device and the second device. Consequently, the third device may be a device similar to the first device, which may reduce complexity of manufacturing. Alternatively, in some embodiments, the second encoder is comprised in the second device which thus act as both an encoder/camera, as well as implements the storage of pre-event video from both the first and second encoder.

According to a second aspect of the invention, the above object is achieved by method for encoding at least one video sequence, the method comprising: continuously receiving, by an encoder having a first encoder state and a second encoder state, image frames of a video sequence to be encoded into an encoded video sequence; encoding, by the encoder, the received image frames using a dynamic group of pictures, GOP, length, and varying the GOP length to meet one or more requirements of the encoded video sequence; upon receiving an external trigger to encode a keyframe, encode, by the encoder, a current image frame of the received image frames as a keyframe, and one or more image frames subsequent to the current image frame in the received image frames as delta frames; setting, prior to receiving an event indication pertaining to the received image frames, the encoder state of the encoder to the second encoder state; and upon receiving the event indication pertaining to the received image frames, setting the encoder state of the encoder to the first encoder state; storing image frames encoded by the encoder during the second encoder state in a FIFO buffer; obtaining a trigger time interval; and while the encoder being in the second encoder state, at the trigger time interval, triggering the encoder to encode a keyframe, such that the FIFO buffer always stores at least one keyframe.

In some embodiments, the method further comprises: continuously receiving, by a second encoder having the first encoder state and the second encoder state, second image frames of a second video sequence to be encoded into a second encoded video sequence; encoding, by the second encoder, the received second image frames using a dynamic group of pictures, GOP, length, and varying the GOP length to meet one or more requirements of the second encoded video sequence; upon receiving an external trigger to encode a keyframe, encoding, by the second encoder, a current image frame of the received second image frames as a keyframe, and one or more image frames subsequent to the current image frame in the received second image frames as delta frames; setting, prior to receiving an event indication pertaining to the received second image frames, the encoder state of the second encoder to the second encoder state; upon receiving the event indication pertaining to the received second image frames, setting the encoder state of the second encoder to the first encoder state; storing image frames encoded by the second encoder during the second encoder state in a second FIFO buffer; and while the encoder and the second encoder being in the second encoder state, at the trigger time interval, triggering the encoder to encode a keyframe and triggering the second encoder to encode a keyframe such that the FIFO buffer always stores at least one keyframe and such that the second FIFO buffer always stores at least one keyframe, wherein the triggering of the encoder and the triggering of the second encoder are performed within a threshold time span.

In examples, obtaining a trigger time comprises determining the trigger time interval based on the size or length of the FIFO buffer and the size or length of the second FIFO buffer.

According to a third aspect of the invention, the above object is achieved by a non-transitory computer-readable storage medium having stored thereon instructions for implementing the method according to the second aspect when executed on a device having processing capabilities.

The second and third aspects may generally have the same features and advantages as the first aspect. It is further noted that the disclosure relates to all possible combinations of features unless explicitly stated otherwise.

### Brief Description of the Drawings

The above, as well as additional objects, features, and advantages of the present invention, will be better understood through the following illustrative and non-limiting detailed description of embodiments of the present disclosure, with reference to the appended drawings, where the same reference numerals will be used for similar elements, wherein:
figure 1 shows a view of scene that is monitored by one or more cameras;
figure 2a is an illustration of an encoded sequence of image frames in a FIFO buffer according to embodiments;
figure 2b is another illustration of an encoded sequence of image frames in a FIFO buffer according to embodiments;
figure 3 shows a first system for encoding a pre-event video sequence and an event video sequence according to embodiments;
figure 4 shows a second system for encoding a pre-event video sequence and an event video sequence according to embodiments;
figure 5 shows a third system for encoding a pre-event video sequence and an event video sequence according to embodiments; and
figure 6 is a flow chart for a method of an encoder encoding a pre-event video sequence and an event video sequence according to embodiments.

### Detailed Description

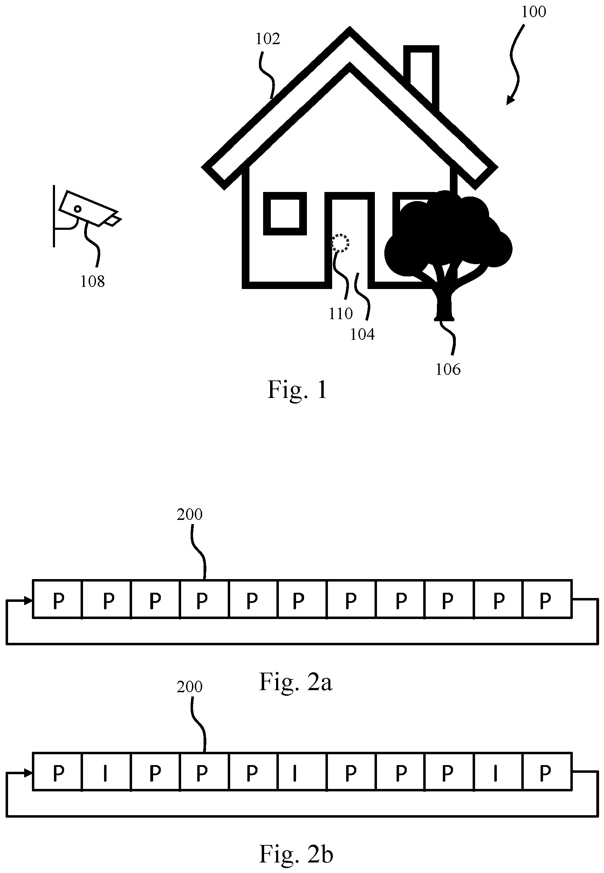

In figure 1, a scene 100 is shown, which is monitored by a first camera 108. In the scene, there is a building 102 with a door 104. The first camera 108 is in this example used for monitoring an area in front of the door 104, particularly for observing movement of people near the door 104. The first camera 108 captures images of the scene, and a video motion detection algorithm is performed on the captured images. The first camera 108 is set up to record video based on events from the motion detection algorithm. Via for example a graphical user interface, a user may define a region of interest in images of the scene 100 in which the motion detection algorithm is to be performed. For instance, the user may be interested only in motion only in front of the door 104, but not in swaying movements of the tree 106. Thus, the user may define a region of interest that covers the desired area in front of the door 104, but not the tree 106. Optionally, a second camera 110 may further monitor the scene. The second camera may be set up to record video based on events similar to the first camera 108. Consequently, the second camera may be triggered to record video at substantially the same time as the first camera 108.

Recording thus begins upon the occurrence of a designated event, for example, that movement is detected within a previously still area as described above. This approach ensures that only relevant footage is captured, significantly enhancing the efficiency of the monitoring process. However, capturing what happens before the event, known as a pre-event sequence or video, can provide essential context. For example, if the system is triggered by someone entering a specific area, such as in front of the door 104, recording the individual's approach to that point can offer valuable insights.

In order to be able to include a pre-event video sequence in recordings, the first camera 108 and the second camera 110 each has access to a first-in-first-out (FIFO) buffer, which will be discussed further below in connection with figures 2-5. The pre-event sequence may be stored by consistently storing encoded image frames in the FIFO buffer, ensuring that recent activity is always available for review. When an event trigger is activated (e.g., a motion detection algorithm determines that there is motion in the region of interest), the system does not just begin recording new footage; it also retrieves the relevant image frames from the FIFO buffer. These encoded image frames show the pre-event sequence, allowing for a comprehensive recording that includes the lead-up to the activity that triggered the recording.

Recording then continues until the motion detection algorithm no longer detects motion within the region of interest (or other changes in the environment, depending on the basis for the event). In order to record also a video sequence of the scene after the event, such that the user may see what happened after a person left the region of interest, an additional post-event recording time may be set, such that recording continues that additional time after the motion detection event has stopped detecting motion in the region of interest. In addition to, or instead of, storing the event video sequence, the cameras 108, 110 may transmit the event video sequence to a site of use, such as a security control centre, where the event video sequence may be viewed and/or recorded. In some embodiments, the FIFO buffer(s) are implemented in a device (not shown in figure 1) separate from the cameras 108, 110, and the captured images of the pre-event recording are continuously transmitted to such a device for storage in the FIFO buffer.

Before the event video sequence may be stored or transmitted, it is encoded using a video codec, such as H.264, H.265, H.266, VP9, AV1, etc.. As discussed above, the images are encoded as I-frames (keyframes) or PB-frames (delta frames), and these are grouped in groups of pictures, also referred to as GOPs. A GOP starts with an I-frame, which is followed by a number of PB-frames.

Large-capacity FIFO buffers require more extensive storage hardware. Especially in systems monitoring multiple channels or cameras, this may mean higher costs for storage acquisition, operation, and cooling. Keeping the buffer size optimized helps in reducing these expenses, particularly critical for extensive surveillance networks or budget-sensitive installations. Therefore, it may be advantageous to keep the FIFO buffer size at an optimum, ensuring it's capacious enough for necessary pre-event data but not so large that it incurs unnecessary costs.

Figure 2a schematically shows a buffer 200 with sections for 11 encoded image frames. The buffer is a FIFO buffer 200, such that when the buffer is full, the oldest image frame in the buffer is overwritten with the latest captured image frame.

The FIFO buffer may be defined by its size and/or length.

In the context of this application, "length" typically refers to the number of data points (in this case, video frames or packets) that the buffer can hold. It is a count of slots or positions available for data storage, indicating how many pieces of data can be lined up in the queue before it reaches capacity. Once the buffer is full, new incoming data will overwrite the oldest data. In this disclosure, the length of the FIFO buffer may determine the amount of time of the pre-event video sequence that can be applied to the event video sequence when an event triggers the system, based on the frame rate and resolution of the video. The length of the FIFO buffer may correspond to e.g., 3, 5, 12, 30, 65, etc. seconds of video data.

The "size" of a FIFO buffer, however, refers to the actual storage capacity, often measured in bytes, kilobytes, megabytes, or even gigabytes, depending on the system. This capacity dictates how much data (in terms of file size) can be stored in the buffer. The number of encoded frames a FIFO buffer can hold is influenced by various factors. I-frames, which are complete images, occupy more space, limiting the buffer's capacity, while P-frames, showing only changes from previous frames, are smaller and allow for more frames to be stored. The video's bitrate and resolution also play a role: higher bitrate and resolution mean larger files, thus fewer frames fit in the buffer. Additionally, the efficiency of the compression algorithm impacts storage capacity, as more effective compression techniques free up space, enabling the buffer to accommodate a greater number of frames.

Depending on the GOP length and the size/length of the FIFO buffer 200, the FIFO buffer 200 may comprise 0 or more I-frames. In the example of figure 2a, the GOP length is larger than 11, which means that under some circumstances, only P-frames are stored in the buffer 200 as indicated in figure 2a.

A more compact buffer size thus underscores the importance of encoding I-frames at adequate intervals during the pre-event recording. This practice ensures that, despite less storage space, the buffered video data remains in a consistently decodable state. By encoding these keyframes with sufficient frequency, the system ensures that at least portions of the pre-event footage are preserved and fully recoverable for analysis, despite the limitations in buffer capacity. For example, in the example of figure 2b, every fourth image frame is encoded as an I-frame, which ensures that at least 8 image frames in the FIFO buffer 200 may be decoded. In the example of figure 2b, 10 images may be decoded.

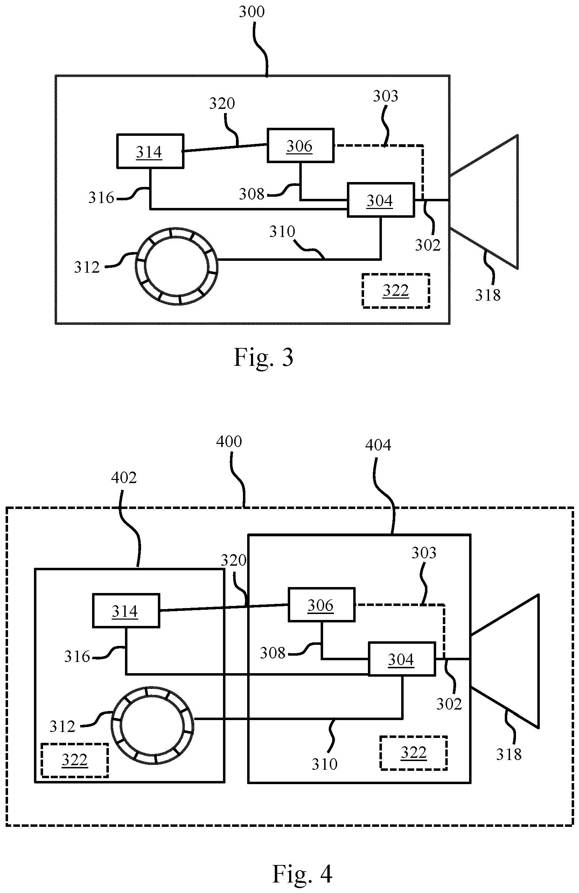

The present disclosure describes techniques to achieve a decodable FIFO buffer on all occasions, in an efficient and flexible manner. Embodiments of such techniques will now be described in conjunction with figures 3-5.

Figure 3 shows a system 300. In this example, the system 300 is implemented in a camera. The camera comprises an image sensor 318 configured to capture image frames depicting a scene (not shown). The system further comprises an encoder 304 (i.e., a first encoder 304) connected to the image sensor 318 and configured to continuously receive image frames captured by the sensor 318 via the connection 302 to the sensor 318. The captured image frames are part of a video sequence which will be encoded into an encoded video sequence by the encoder 304.

The encoder 304 is configured to encode the received image frames using a dynamic group of pictures, GOP, length, and varying the GOP length to meet one or more requirements of the encoded video sequence. Possible requirements include for example bit rate of the encoded video sequence, power consumption of the encoder, quality of the encoded video sequence, seek time of the decoded version of the encoded video sequence, etc.

The encoder 304 further implements a force keyframe functionality. Put differently, upon receiving an external trigger to encode a keyframe, the encoder 304 is configured to encode a current image frame of the received image frames as a keyframe, and one or more image frames subsequent to the current image frame in the received image frames as delta frames.

The encoder 304 has a first encoder state and a second encoder state. The first encoder state is used when an event indication is identified in the captured video sequence. As described above, the event indication may correspond to a detected motion in the video sequence, a detected object (e.g., of a certain type) in the video sequence, a detected environmental condition such as the velocity of a vehicle in the environment exceeding a threshold velocity, etc. The event indication may further correspond to a manual activation of the first encoder state, for example by an operator of the camera/system 300. For example, the camera may be a body worn camera, and the operator may manually activate an event mode of the camera in case something happens in the environment in which the operator walking/driving. The second encoder state is used pre-event, e.g., before an event is detected. In some embodiments, the second encoder state is also used after an event has ended. An event may end for example at a defined time after an event has been detected, or when the environmental conditions have changed such that these do no longer indicate an event, etc.

To control the encoder state of the encoder 304, the system comprises an encoding state controller 306 connected to the encoder 304 via a connection 308. In some examples, the encoding state controller 306 is receiving the captured images through a connection 303 with the sensor 318 and performs analysis on the image frames to identify an event indication. In these embodiments, the encoder state controller 306 may implement image analysis algorithms or similar to identify the event. In other embodiments, the event state controller 306 receives information about an event indication by other means, such as from a physical push button of the system 300, from a sensor (heat, motion, gyro, etc.) of the system 300 or by other suitable means.

The encoding state controller 306 thus, prior to receiving an event indication pertaining to the received image frames, sets the encoder state of the encoder 304 to the second encoder state. This means that typically, when an event is not ongoing, the encoder 304 will be in the second encoder state. Upon receiving the event indication pertaining to the received image frames, the encoder state of the encoder 304 is set to the first encoder state by the encoder state controller 306.

The system 300 further comprises a FIFO buffer 312 (i.e., a first FIFO buffer 312) configured to store image frames encoded by the encoder 304 during the second encoder state. For that reason, the encoder 304 is connected to the FIFO buffer 312 via a connection 310. Typically, the encoder 304 transmits each encoded image separately, or in chunks, for storage in the FIFO buffer 312 using the connection 310 to the FIFO buffer 312.

The system 300 further comprises a keyframe controller 314. The keyframe controller 314 is aware of the encoder state of the encoder 306, for example via a connection 320 to the encoding state controller 306 or by other suitable means such as getting this information directly from the encoder 304.

The keyframe controller 314 is configured to obtain a trigger time interval. The keyframe controller 314 is further configured to, while the encoder being in the second encoder state (i.e., in the pre-event state in which video is buffered in the FIFO buffer 312), at the trigger time interval, trigger (e.g., using a connection 316 between the keyframe controller 314 and the encoder 304) the encoder to encode a keyframe, such that the FIFO buffer 312 always stores at least one keyframe.

The trigger time interval may be determined by considering a size or length of the FIFO buffer. For example, if the length of the FIFO buffer indicates that 52 image frames can be stored in the FIFO buffer, this in conjunction with the frame rate of the image sensor 318 may be used to determine the trigger time interval, such that the FIFO buffer 312 always stores at least one keyframe. For example, if the length of the FIFO buffer indicates that 5 seconds of video can be stored in the FIFO buffer, this may be used to determine the trigger time interval, such that the FIFO buffer 312 always stores at least one keyframe. The trigger time interval may in some embodiments be static, e.g., a predetermined trigger time interval, such as 1 second or 10 seconds. The trigger time interval may in other embodiments be dynamic and based on e.g., the size of a recently encoded I-frame and P-frame, to dynamically estimate how many frames/seconds of pre-event video that can fit in the FIFO buffer 312.

In some embodiments, the system 300 further comprises a combining unit 322 configured to, upon the encoder switching from the second encoder state to the first encoder state, extract the encoded image frames stored in the FIFO buffer 312 and append image frames encoded by the encoder 304 in the first encoder state to form the encoded video sequence. The combining unit 322 may thus be connected to the FIFO buffer 312 and the encoder 304. The combining unit 322 may be configured to store the encoded video sequence in a memory (e.g., in the system, or external to the system), or to transmit or stream the encoded video sequence to an external unit (not shown in figure 3).

In some embodiments, as shown in figure 4, the encoder 304 is comprised in a first device 404, such as in a camera 404. Alternatively (not shown in figure 4), the encoder may be comprised in an encoder device connected to a camera to receive the image frames to be encoded. The keyframe controller 314 and the FIFO buffer 312 may in some embodiments be comprised in a second device 402, separate from the first device 404. In these embodiments, the first device 404 is designed to send encoded image frames (produced by the encoder 304 during its second operational state) over connection 310 to the second device 402 for storage in the FIFO buffer 312. The connection (e.g., connection 310) between the first device 404 and the second device 402 can be established either wirelessly or through wired means.

In some embodiments, the first device 404 is configured to transmit (through the connection 310) image frames encoded by the encoder 304 during the second encoder state to the second device 402 using a video streaming protocol. The video streaming controls commonly used in the industry include Real-Time Protocol (RTP), HTTP Live Streaming (HLS), Dynamic Adaptive Streaming over HTTP (MPEG-DASH), Real-Time Messaging Protocol (RTMP), and Real-Time Streaming Protocol (RTSP). Each of these protocols serves various purposes in the streaming and broadcast environments.

In some embodiments, the second device 402 is configured to transmit (e.g., using the connection 316) the trigger to encode a keyframe using a streaming control protocol corresponding to the video streaming protocol. Examples of streaming control protocols and components often utilized in managing and directing media streams are Real-Time Control Protocol (RTCP), Real-Time Streaming Protocol (RTSP), RTMP Control Messages, and the MPEG-DASH Manifest (MPD).

It should be noted that that functionality described in conjunction with the system 300 of figure 3 applies to the system 400 of figure 4. For example, the system 400 may also comprise a combining unit 322 as described in conjunction with figure 3. The combining unit 322 may be comprises in either of the first device 404 and the second device 402, or in a separate device (not shown in figure 4). In case the combining unit 322 is comprised in the second device 402, the combining unit 322 may be configured to receive encoded image frames from the encoder 304 as encoded during the event (in the first encoder state) and form the encoded video sequence by appending these received encoded image frames to the encoded image frames stored in the FIFO buffer 312. The encoded image frames from the encoder 304, as encoded during the event, may be received at the combining unit 322 using the video streaming protocol as discussed above. In case the combining unit is comprised in the first device 404, the combining unit may be configured to receive the encoded image frames stored in the FIFO buffer 312 from the second device 402 and form the encoded video sequence by appending encoded image frames from the encoder 304 as encoded during the event (in the first encoder state) to the received image frames from the FIFO buffer 312.

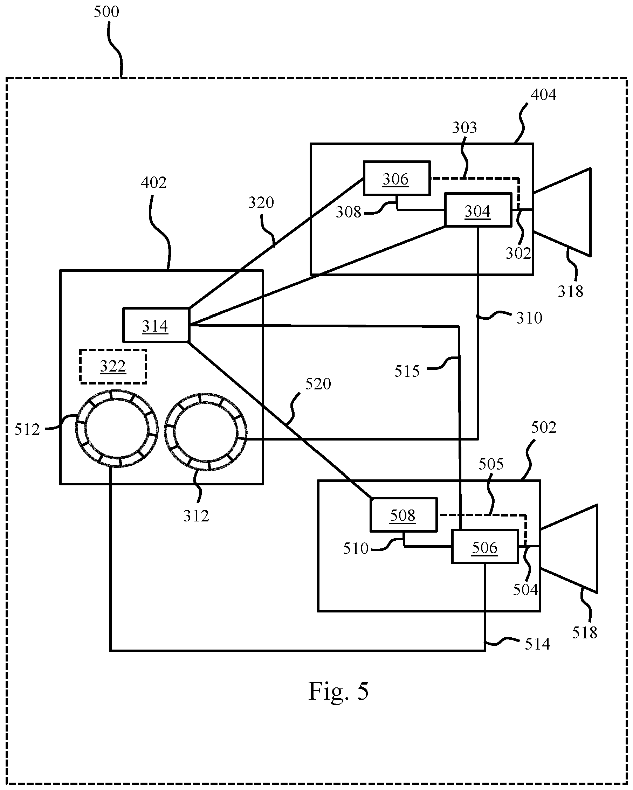

In some embodiments, the system comprises a second encoder 506, similar to the first encoder 304 discusses above, which is configured to encode second image frames received from a second image sensor. Such an embodiment is exemplified in figure 5. In figure 5, the system 500 comprises a third device 502, which comprises the second encoder 506. In other embodiments (not shown in figure 5), the second encoder 506 may be comprised in the second device 402, which thus may act as both an encoder device and used for storing pre-event video sequences from both the first and second encoder.

In figure 5, the third device 502 is a camera and comprises a second encoding state controller 508, and a second image sensor 518. The second state controller 508 is connected to the second encoder 506 and optionally to the second sensor 518 similarly as discussed above for the first encoder 304. The second encoder 506 thus is configurable in the first and second encoder state.

In the embodiment of figure 5, the second device 402 further comprises a second FIFO buffer 512 configured to store image frames encoded by the second encoder 506 during the second encoder state. In some examples, the third device 502 is configured to transmit (through a connection 514) image frames encoded by the encoder 506 during the second encoder state to the second device 402 using a video streaming protocol (or in any other suitable way), similarly as discussed above for the first encoder 304. The connection (e.g., connections 520, 515, 514) between the third device 502 and the second device 402 can be established either wirelessly or through wired means.

The keyframe controller 314 is in this embodiment configured to, while the encoder and the second encoder being in the second encoder state, at the trigger time interval, trigger the first encoder 304 to encode a keyframe and trigger the second encoder 506 (through a connection 515) to encode a keyframe such that the first FIFO buffer 312 always stores at least one keyframe and such that the second FIFO buffer 512 always stores at least one keyframe. The keyframe controller 314 may be aware of the encoder states of the first and second encoder 304, 506, similarly as was described above in conjunction with figures 3-4, e.g., through connections 520, 320.

The trigger time interval may for example be a pre-determined trigger time interval configured such that the first FIFO buffer 312 always stores at least one keyframe and such that the second FIFO buffer 512 always stores at least one keyframe. The trigger time interval may be dynamically determined by the keyframe controller based on the size or length of the first FIFO buffer 312 and the size or length of the second FIFO buffer 512. For example, if the keyframe controller 314 detects an excessive number of P-frames in one of the FIFO buffers 312, 512, surpassing a certain threshold like 80% or 90% or any other suitable threshold, it may prompt an immediate response by adjusting the trigger time interval. This adjustment ensures the immediate (or as soon as possible) encoding of a keyframe by both the first encoder 304 and the second encoder 506. Similarly, if the keyframe controller 314 recognizes that the earliest I-frame present in the FIFO buffers 312, 512 is positioned too far into the buffer sequence (for example 30%, 55%, 73%, etc.), it may again modify the trigger time interval to instantly command both encoders 304 and 506 to generate a keyframe, ensuring accessibility and continuity of the pre-event video sequences stored in the FIFO buffers 312, 512.

The keyframe controller 314 may be configured to initiate a trigger to both the first encoder 304 and the second encoder 506 within a predefined time span, such as 1, 3, or 10 milliseconds, aiming for simultaneous activation. This concurrent signalling is intended to synchronize the encoding of keyframes across both systems. However, it's important to recognize that while the encoders 304, 506 receive their triggers at essentially the same moment, the actual encoding of keyframes may not be guaranteed to occur within a precise timeframe. Instead, the encoders 304, 506 endeavour to process the request as swiftly as possible, operating on a 'best effort' basis that depends on current workloads and operational conditions.

By dispatching a simultaneous signal to all connected cameras (such as the first and third devices 404, 502) to "force keyframe," each encoder is triggered to generate a keyframe at that specific moment, regardless of their individual recording timelines.

This system-wide synchronization is particularly beneficial in security setups or monitoring scenarios. For instance, consider a situation such as the one shown in figure 1, where multiple cameras 108, 110 are installed around an entrance 104, each tasked with recording different perspectives: one capturing the approach towards the entrance and another focused on the door itself. In a typical operation, these cameras 108, 110 function independently, encoding keyframes based on their internal logic and environmental triggers, which might result in desynchronized video feeds.

However, with the ability to trigger a 'force keyframe' across all cameras 108, 110, the system 500 can ensure that a keyframe, or intra frame, is encoded at the exact instance the signal is sent (or on a best effort basis as discussed above). This creates a harmonized point across all video feeds, allowing for a cohesive view of all angles at a given moment, also for the pre-event video stored in the FIFO-buffers 312, 512.

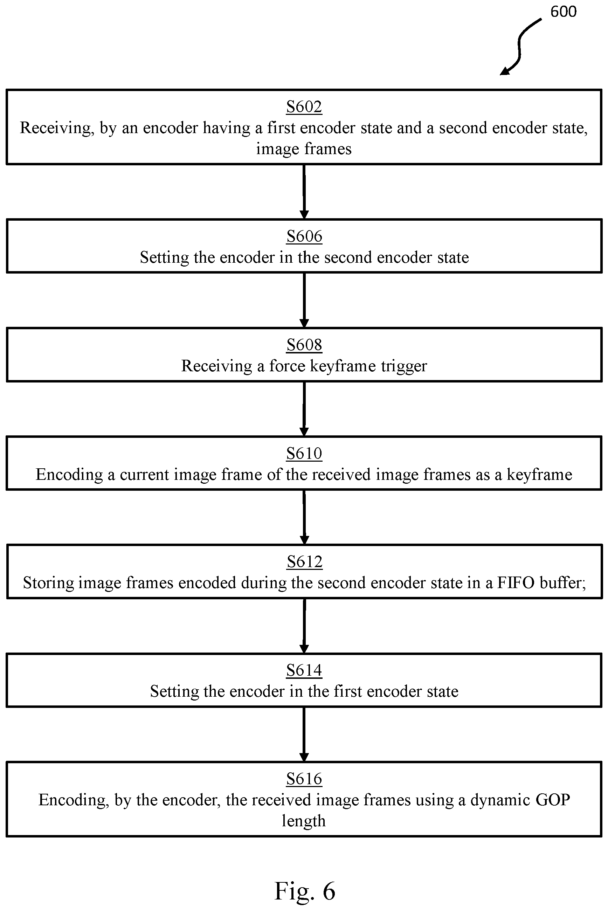

Figure 6 shows by way of example a flow chart of a method 600 implemented by an encoder, such as the first encoder 304 and/or second encoder 506 discussed above. The method 600 comprises continuously receiving S602, by an encoder having a first encoder state and a second encoder state, image frames of a video sequence to be encoded into an encoded video sequence.

The method 600 further comprises, setting S606, prior to receiving an event indication pertaining to the received image frames, the encoder state of the encoder to the second encoder state.

The method 600 further comprises, while the encoder is in the second encoder state, receiving S608 an external trigger to encode a keyframe. Upon receiving S608 the trigger, the encoder encodes S610 a current image frame of the received image frames as a keyframe, and one or more image frames subsequent to the current image frame in the received image frames as delta frames.

The method 600 further comprises storing S612 image frames encoded by the encoder during the second encoder state in a FIFO buffer.

The method 600 further comprises, setting S614, the encoder in the first encoder state, and encoding S616 by the encoder, the received image frames using a dynamic group of pictures, GOP, length, and varying the GOP length to meet one or more requirements of the encoded video sequence.

The method 600 and other embodiments of the functionality described herein may be implemented as instructions stored by one or more non-transitory computer-readable media executable by one or more processors. Generally, the device(s) implementing the systems 300, 400, 500 may comprise circuitry which is configured to implement the components of the systems 300, 400, 500 and, more specifically, their functionality. The described features in the systems 300, 400, 500 can be implemented advantageously in one or more computer programs that are executable on a programmable system including at least one programmable processor. Suitable processors for the execution of a program of instructions include, by way of example, both general and special purpose microprocessors, and the sole processor or one of multiple processors or cores, of any kind of computer. The processors can be supplemented by, or incorporated in, ASICs (application-specific integrated circuits).

The above embodiments are to be understood as illustrative examples of the invention. Further embodiments of the invention are envisaged. For example, in the depictions from figures 3-5, only a singular stream of image frames is sent from a camera to its designated FIFO-buffer. However, in certain variations, the encoder can concurrently process the incoming image frames using multiple codecs, resolutions, frame rates, or other customizable attributes. In such configurations, the image frames encoded during the pre-event phase are relayed across multiple streams destined for separate FIFO-buffers. This approach ensures the storage of the encoded video sequence in diverse formats, providing greater flexibility and choice in playback or analysis. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A system (300, 400, 500) comprising:
a first encoder (304) having a first encoder state and a second encoder state, the encoder configured to:
continuously receive (S602) image frames of a video sequence to be encoded into an encoded video sequence;
encode (S616) the received image frames using a dynamic group of pictures, GOP, length, and varying the GOP length to meet one or more requirements of the encoded video sequence;
upon receiving (S608) an external trigger to encode a keyframe, encode a current image frame of the received image frames as a keyframe, and one or more image frames subsequent to the current image frame in the received image frames as delta frames;
a first encoding state controller (306) configured to:
prior to receiving an event indication pertaining to the received image frames, setting (S606) the encoder state of the first encoder to the second encoder state; and
upon receiving the event indication pertaining to the received image frames, setting (S614) the encoder state of the first encoder to the first encoder state;
a first FIFO buffer (200, 312) configured to store image frames encoded by the first encoder during the second encoder state; and
a keyframe controller (314) configured to:
obtain a trigger time interval and
while the first encoder being in the second encoder state, at the trigger time interval, trigger the first encoder to encode a keyframe, such that the first FIFO buffer always stores at least one keyframe.

2. The method of claim 1, wherein obtaining a trigger time interval comprises at least one of:
determining the trigger time based on a size or length of the first FIFO buffer, or
obtaining a predetermined trigger time interval.

3. The system of any one of claims 1-2, further comprising a combining unit (322) configured to, upon the first encoder switching from the second encoder state to the first encoder state, extract the encoded image frames stored in the first FIFO buffer and append image frames encoded by the first encoder in the first encoder state to form the encoded video sequence.

4. The system of claims 1-3, wherein the first encoder is comprised in a first device (404), wherein keyframe controller and the first FIFO buffer are comprised in a second device (402), separate from the first device, wherein the first device is configured to transmit image frames encoded by the first encoder during the second encoder state to the second device for storing in the first FIFO buffer.

5. The system of claim 4, wherein the first device comprises an image sensor (318) configured to capture the image frames received by the first encoder.

6. The system of any one of claims 4-5, wherein the first device is configured to transmit image frames encoded by the first encoder during the second encoder state to the second device using a video streaming protocol.

7. The system of claim 6, wherein the second device is configured to transmit the trigger to encode a keyframe using a streaming control protocol corresponding to the video streaming protocol.

8. The system of any one of claims 1-7, further comprising a plurality of first FIFO buffers, each first FIFO buffer configured to store image frames encoded by the first encoder during the second encoder state, wherein the plurality of first FIFO buffers are configured to store image frames encoded according to at least one of: different codecs, different resolutions, or different frame rates.

9. The system of any one of claims 1-8, further comprising:
a second encoder (506) having the first encoder state and the second encoder state, wherein the second encoder is configured to:
continuously receive second image frames of a second video sequence to be encoded into a second encoded video sequence;
encode the received second image frames using a dynamic group of pictures, GOP, length, and varying the GOP length to meet one or more requirements of the encoded video sequence;
upon receiving an external trigger to encode a keyframe, encode a current image frame of the received second image frames as a keyframe, and one or more image frames subsequent to the current image frame in the received second image frames as delta frames;
a second encoding state controller (508) configured to:
prior to receiving an event indication pertaining to the received second image frames, setting the encoder state of the second encoder to the second encoder state; and
upon receiving the event indication pertaining to the second received image frames, setting the encoder state of the second encoder to the first encoder state;
a second FIFO buffer (200, 512) configured to store image frames encoded by the second encoder during the second encoder state;
wherein the keyframe controller is configured to:
while the first encoder and the second encoder being in the second encoder state, at the trigger time interval, trigger the encoder to encode a keyframe and trigger the second encoder to encode a keyframe such that the first FIFO buffer always stores at least one keyframe and such that the second FIFO buffer always stores at least one keyframe, wherein the triggering of the encoder and the triggering of the second encoder are performed within a threshold time span.

10. The system of claim 9, wherein obtaining a trigger time interval comprises:
determine the trigger time interval based on the size or length of the first FIFO buffer and the size or length of the second FIFO buffer.

11. The system any one of claims 9-10 when dependent on any one of claims 4-7, wherein the second encoder is comprised in a third device (502), separate from the first device and the second device.

12. A method for encoding at least one video sequence, the method comprising:
continuously receiving (S602), by a first encoder having a first encoder state and a second encoder state, image frames of a video sequence to be encoded into an encoded video sequence;
encoding (S616), by the first encoder, the received image frames using a dynamic group of pictures, GOP, length, and varying the GOP length to meet one or more requirements of the encoded video sequence;
upon receiving (S608) an external trigger to encode a keyframe, encode (S610), by the first encoder, a current image frame of the received image frames as a keyframe, and one or more image frames subsequent to the current image frame in the received image frames as delta frames;
setting (S606), prior to receiving an event indication pertaining to the received image frames, the encoder state of the first encoder to the second encoder state; and
upon receiving the event indication pertaining to the received image frames, setting (S614) the encoder state of the first encoder to the first encoder state;
storing (S612) image frames encoded by the first encoder during the second encoder state in a first FIFO buffer;
obtaining a trigger time interval; and
while the first encoder being in the second encoder state, at the trigger time interval, triggering the first encoder to encode a keyframe, such that the first FIFO buffer always stores at least one keyframe.

13. The method of claim 12, further comprising:
continuously receiving, by a second encoder having the first encoder state and the second encoder state, second image frames of a second video sequence to be encoded into a second encoded video sequence;
encoding, by the second encoder, the received second image frames using a dynamic group of pictures, GOP, length, and varying the GOP length to meet one or more requirements of the second encoded video sequence;
upon receiving an external trigger to encode a keyframe, encoding, by the second encoder, a current image frame of the received second image frames as a keyframe, and one or more image frames subsequent to the current image frame in the received second image frames as delta frames;
setting, prior to receiving an event indication pertaining to the received second image frames, the encoder state of the second encoder to the second encoder state;
upon receiving the event indication pertaining to the received second image frames, setting the encoder state of the second encoder to the first encoder state;
storing image frames encoded by the second encoder during the second encoder state in a second FIFO buffer; and
while the first encoder and the second encoder being in the second encoder state, at the trigger time interval, triggering the first encoder to encode a keyframe and triggering the second encoder to encode a keyframe such that the first FIFO buffer always stores at least one keyframe and such that the second FIFO buffer always stores at least one keyframe, wherein the triggering of the first encoder and the triggering of the second encoder are performed within a threshold time span.

14. The method of claim 13, wherein obtaining a trigger time comprises:
determining the trigger time interval based on the size or length of the first FIFO buffer and the size or length of the second FIFO buffer.

15. A non-transitory computer-readable storage medium having stored thereon instructions for implementing the method according to any one of claims 12-14 when executed on one or more devices having processing capabilities.
